# EUROPÄISCHE PATENTSCHRIFT

(11) **EP 2 888 556 B1**
(45) Veröffentlichungstag und Bekanntmachung des Hinweises auf die Patenterteilung: **11.01.2017**
(21) Anmeldenummer: 13762983.8
(22) Anmeldetag: 19.08.2013
(51) Int. Cl.: G01C 21/20

(54) **VERFAHREN UND VORRICHTUNG ZUR ERMITTLUNG EINER FAHRZEUGPOSITION IN EINER KARTIERTEN UMGEBUNG**
METHOD AND DEVICE FOR DETERMINING A VEHICLE POSITION IN A MAPPED ENVIRONMENT
MÉTHODE ET DISPOSITIF POUR DÉTERMINER LA POSITION D'UN VÉHICULE DANS UN ENVIRONNEMENT CARTOGRAPHIÉ

(30) Priorität: 23.08.2012 DE 102012016800
(43) Veröffentlichungstag der Anmeldung: 01.07.2015
(73) Patentinhaber: Audi AG, 85045 Ingolstadt (DE)
(72) Erfinder: STÜMPER, Stefan, 85072 Eichstätt (DE)
(74) Vertreter: Thielmann, Frank
(86) Internationale Anmeldenummer: PCT/EP2013/002494
(87) Internationale Veröffentlichungsnummer: WO 2014/029490

(56) Entgegenhaltungen:
- EP-A1- 2 418 634
- US-A1- 2008 101 656
- US-A1- 2010 066 587
- US-A1- 2012 130 595
- KUMMERLE R ET AL: "Autonomous driving in a multi-level parking structure", 2009 IEEE INTERNATIONAL CONFERENCE ON ROBOTICS AND AUTOMATION : (ICRA) ; KOBE, JAPAN, 12 - 17 MAY 2009, IEEE, PISCATAWAY, NJ, USA, 12 May 2009 (2009-05-12), pages 3395-3400, XP031509599, ISBN: 978-1-4244-2788-8

## Beschreibung

Die Erfindung betrifft ein Verfahren und eine Vorrichtung zur Ermittlung einer Fahrzeugposition eines zu lokalisierenden Fahrzeugs innerhalb eines vorgegebenen Fahrbereichs in einer kartierten Umgebung.

Moderne Fahrzeuge verfügen über Fahrerassistenzsysteme, die aktiv in die Fahrsituation eingreifen können. Solche Systeme sind z.B. Spurwarnsysteme, die den Fahrer nicht nur warnen, wenn er z.B. eine weiße Straßenmarkierung überfährt, sondern auch durch einen Lenkeingriff ein weiteres Überfahren der Markierung verhindern. Auch gibt es Fahrerassistenzsysteme, die zusätzlich für den Komfort des Fahrers sorgen, wie z.B. Einparksysteme, die ohne Zutun des Fahrers das Fahrzeug in eine Parklücke einparken können. Ein solches Einparksystem parkt ein Fahrzeug durch Lenkeingriff, meist zusammen mit automatisierter Geschwindigkeitssteuerung, selbständig ein.

Damit ein Fahrzeug allerdings dem Fahrer vollständig oder situativ die Fahraufgabe abnehmen und somit pilotiert, also autonom, agieren kann, muss das Fahrzeug die eigene Position innerhalb seiner (direkten oder weitläufigen) Umgebung hochgenau analysieren und eine entsprechende Aktionsplanung durchführen können.

Allgemein sind aus dem Stand der Technik Fahrerassistenzsysteme, bei denen Entfernungen zwischen beispielsweise einem Fahrzeug und einer Bake bestimmt werden, so dass ein Fahrzeug z.B. innerhalb eines Parkhauses pilotiert fahren kann, wobei die Sensorik am Fahrzeug angebracht ist.

Aus dem deutschen Patent mit der Nummer DE 3248544 C2 ist ein System zur Informationsübertragung zwischen ortsfesten Baken und einem Fahrzeug bekannt. Die Informationen werden dabei mittels Infrarotstrahlung durch mindestens zwei am Fahrzeug angeordnete und unterschiedlich ausgerichtete Sender-/Empfängerkombinationen übertragen. Die am Fahrzeug angeordneten Empfänger weisen jeweils einen Störsignalindikator auf, der denjenigen Empfänger sperrt, dessen Störsignal über einer vorgegebenen Schwelle liegt. Durch die mindestens zwei unterschiedlich ausgerichteten Sender/Empfänger kann auch bei ungünstiger Sonneneinstrahlung, welche einen Empfang von Infrarotsignalen stören würde, eine störungsfreie Übertragung erfolgen.

Aus dem deutschen Patent mit der Nummer DE 4026649 C1 ist ein Datenübertragungssystem mit Laser in Form eines Infrarot-Ortungssystems bekannt. Bei diesem System wird eine ortsfeste IR-Bake, die eine Kodierung zur Identifizierung aufweist, von einer am Fahrzeug befestigten mobilen Sende-/Empfangseinheit, die eine vorbestimmte Laserstrahlung aussendet, erkannt und die empfangenen (Positions-)Daten werden dann zur Auswertung an eine Auswerteeinrichtung weitergeschickt.

Aus der Veröffentlichung der deutschen Patentanmeldung mit der Nummer DE 11 2006 001 864 T5 ist ein System zur Beobachtung der Fahrzeugumgebung aus einer entfernten Perspektive bekannt, um ein großes Gebiet um das Fahrzeug herum beobachten zu können und so eine verbesserte Kollisionswarnung, -vermeidung und -verringerung zu erreichen bzw. ein verbessertes Situationsbewusstsein des Fahrers zu erreichen. Bei diesem System sind in dem Fahrzeug mindestens ein System aus einem (Video-) Kamerasystem, einem GPS-System mit Kartendatenbank, einem Fahrzeug-Fahrzeug-Kommunikationssystem und einem Fern-/Nahbereichs-Radar bereitgestellt, wodurch Positionsdaten von Objekten in der Nähe des Fahrzeugs und innerhalb der Felderfassungsfähigkeiten bereitgestellt werden. Ziel des Systems ist eine zwei- oder dreidimensionale Darstellung der Umgebung des Fahrzeugs, in der auch Hindernisse dargestellt sind, wobei der Fahrer den Blickwinkel selbst wählen kann, z.B. von schräg oben oder von schräg hinter dem Fahrzeug.

Aus der Offenlegungsschrift der deutschen Patentanmeldung mit der Nummer DE 10 2009 046 671 A1 ist ein Verfahren zur Führung eines Kraftfahrzeugs mittels einer Führungseinrichtung bekannt, wobei das Umfeld des Fahrzeugs mit einem am Fahrzeug befestigten optoelektronischen Sensor konturiert erfasst wird. Dieser Sensor scannt die Fahrbahn und liefert Informationen über wenigstens ein Begrenzungsobjekt, das sich in der Fahrbahn des Fahrzeugs befindet, wobei auch eine Anzeige für den Fahrer über ein Display erfolgen kann. Durch das System kann auch eine optimale Fahrtrichtung des Fahrzeugs bestimmt werden und diese durch einen Lenkeingriff durch das System hergestellt werden.

Aus der Veröffentlichung der internationalen Patentanmeldung mit der Nummer WO 2008/112148 A1 ist ein AR (Augmented Reality, Erweiterte Realität)-basiertes System und Verfahren bekannt, bei dem ein unbemanntes Fahrzeug von einem Benutzer von außen gesteuert werden kann, wobei die dazu benötigten Daten (z.B. Position oder Status des Fahrzeugs etc.) von einem Sensor, der an dem Fahrzeug befestigt ist, geliefert werden. Diese Informationen werden in eine Grafik umgewandelt und diese wird dann für den Benutzer dargestellt, wobei zusätzlich über in der Grafik angezeigte Führungselemente eine Steuerung des Fahrzeugs ermöglicht wird.

Aus den Veröffentlichungen US 2008/0101656 A1, EP 2 418 634 A1, US 2012/0130595 A1 und US 2010/0066587 A1 sind weitere Systeme bekannt, bei denen ein Fahrzeug in einem Parkbereich geführt und eingeparkt werden kann.

Ferner beschreibt die Veröffentlichung "Autonomous Driving in a Multi-level Parking Structure" von Kümmerle, et. al. in 2009 IEEE International Conference on Robotics and Automation, (ICRA), Kobe, Japan, May 12-17, 2009, IEEE Piscataway, NJ, USA, 12. Mai 2009 (2009-05-12), Seiten 3395-3400, XP031509599, ISBN 978-1-4244-2788-9, eine weitere Möglichkeit eines autonomen Navigierens eines Fahrzeugs in einer kartierten

Die US 2008/101656 A1 offenbart die Positionsbestimmung eines Fahrzeugs, die auf Positionsdaten z.B. eines Vorderrades basiert, die von in der Umgebung fest installierten Sensoren geliefert werden.

Ein Nachteil der vorhergehend beschriebenen Systeme ist, dass die Genauigkeit der Positionsbestimmung des Fahrzeugs nicht ausreicht, um eine auf die Situationsumgebung abgestimmte exakte und zuverlässige pilotierte Steuerung des Fahrzeugs bereitzustellen, also ein autonomes Fahren des Fahrzeugs zu ermöglichen. Dies wirkt sich beispielsweise auf ein pilotiertes Einparken oder ein pilotiertes Navigieren in engen oder schwierig befahrbaren Umgebungen aus.

Aufgabe der Erfindung ist es, ein Verfahren bereitzustellen, das es ermöglicht, ein Fahrzeug hochgenau innerhalb kartierter bzw. kartierbarer Umgebungen in Echtzeit zu lokalisieren und auch zu positionieren, so dass die oben genannten Nachteile zu überwunden werden können, wobei gleichzeitig ein technisches Hochrüsten des Fahrzeugs, z.B. durch zusätzlich anzubringende Sensorik, vermieden werden soll.

Diese Aufgabe wird in einem Aspekt durch ein Verfahren mit den Merkmalen gemäß Patentanspruch 1 und in einem anderen Aspekt durch eine Vorrichtung gemäß Patentanspruch 9 gelöst. Vorteilhafte Ausführungsformen werden in den entsprechenden Unteransprüchen definiert.

Bei dem erfindungsgemäßen Verfahren zur Ermittlung einer Fahrzeugposition eines zu lokalisierenden Fahrzeugs innerhalb eines vorgegebenen Fahrbereichs in einer kartierten Umgebung wird die Fahrzeugposition durch eine Auswertung von Positionsdaten mindestens einer vorbestimmten Komponente des Fahrzeugs bestimmt, wobei die Positionsdaten durch eine innerhalb der kartierten Umgebung fest angeordnete Sensoreinrichtung bereitgestellt werden.

Durch das erfindungsgemäße Verfahren und die erfindungsgemäße Vorrichtung wird es möglich, das Problem der vorliegenden Erfindung zu lösen.

Vorteilhafterweise besitzt bei dem erfindungsgemäßen Verfahren die Sensoreinrichtung eine Vielzahl an Positionserfassungssensoren, und einer der Vielzahl von Positionserfassungssensoren wird als ein Mastersensor ausgewählt, der ein globales Sensorkoordinatensystem aufspannt, und die anderen der Vielzahl von Positionserfassungssensoren beschreiben ihre Positionsdaten in dem aufgespannten Sensorkoordinatensystem. Der Vorteil eines globalen Koordinatensystems und der Überführung der Daten der Sensoren in ein globales Koordinatensystem besteht darin, dass dadurch jede Objektposition in diesem einen Koordinatensystem definiert ist und somit eine einfachere, schnellere und effizientere Auswertung der Daten stattfinden kann. Alternativ kann die Sensoreinrichtung einen einzigen Sensor, insbesondere einen Lidar-Sensor mit Winkelerfassung, aufweisen.

Vorteilhafterweise wird als die vorbestimmte Komponente ein Reifen des Fahrzeugs erfasst. Der Vorteil, dass zumindest ein Reifen eines Fahrzeugs als die vorbestimmte Komponente dient, dass also die Positionsbestimmung basierend auf mindestens einem Reifen des Fahrzeugs geschieht, besteht darin, dass die Umrisse und Materialien eines Reifens sehr genau definiert sind, im Gegensatz zu den Umrissen oder Materialien beispielsweise eines Außenspiegels oder eines Teils der Fahrzeugkarosserie, die spiegeln können, durch hinzugefügte Designelemente schwer messbar werden oder ähnliches. Außerdem ist der Vorteil von Reifen, dass sie in einer bestimmten Höhe vom Boden weg zuverlässig für beinahe jedes Fahrzeug vorhanden sind, unabhängig von ihrer Größe oder der Größe bzw. Art des Fahrzeugs.

Vorteilhafterweise werden bei dem erfindungsgemäßen Verfahren die Positionsdaten von vier Reifen des zu lokalisierenden Fahrzeugs erfasst. Der Vorteil der Messung der Position von allen Reifen eines Fahrzeugs, speziell eines PKWs, besteht darin, dass dadurch die Positionsbestimmung innerhalb der kartierten Umgebung erheblich verbessert wird.

Vorteilhafterweise werden die Positionsdaten jeder der mindestens einen vorbestimmten Komponente über die Zeit verfolgt und plausibilisiert, so dass die Position einer jeden vorbestimmten Komponente bestimmt wird, und dann wird durch Fusionieren der Positionsdaten jeder der mindestens einen vorbestimmten Komponente die Position des Fahrzeugs relativ zum Sensorkoordinatensystem bestimmt. Durch die Plausibilitätsprüfung und Fusionierung der gemessenen Positionsdaten jedes der Sensoren wird die Positionsbestimmung durch die größere Anzahl der vorhandenen Daten deutlich verbessert.

Vorteilhafterweise werden bei dem erfindungsgemäßen Verfahren die Positionsdaten in Echtzeit ausgewertet. Der Vorteil der Auswertung in Echtzeit ist, dass eine Reaktion auf z.B. ein Hindernis sofort, also innerhalb weniger Millisekunden erfolgt, und sich dadurch das Risiko eines ungewollten Zusammenstoßens mit einem Hindernis deutlich verringert.

Vorteilhafterweise weist bei dem erfindungsgemäßen Verfahren jeder der Vielzahl der Positionserfassungssensoren einen Öffnungswinkel von 180° und eine Reichweite von bis zu 30m auf. Der Vorteil dieser Dimensionierung der Sensoren besteht darin, dass durch den großen Öffnungswinkel und die hohe Reichweite ein großer zu überwachender Bereich abgedeckt werden kann und somit insgesamt weniger Sensoren verwendet werden müssen als bei einem kleineren Öffnungswinkel und geringerer Reichweite.

Vorteilhafterweise ist bei dem erfindungsgemäßen Verfahren jeder der Vielzahl der Positionserfassungssensoren ein Lidarsensor. Der Vorteil von Lidarsensoren ist, insbesondere in geschützten Umgebungen, dass durch das verwendete Lasermessverfahren eine hochpräzise Abstandsmessung erfolgt, was diese Sensoren ideal für eine hochgenaue Positionserfassung eines Fahrzeugs macht.

In einer weiteren Ausgestaltung der Erfindung ist eine Vorrichtung zur Ermittlung einer Fahrzeugposition eines zu lokalisierenden Fahrzeugs innerhalb eines vorgegebenen Fahrbereichs in einer kartierten Umgebung mit einer innerhalb der kartierten Umgebung fest angeordneten Sensoreinrichtung, die zur Bereitstellung von Positionsdaten mindestens einer vorbestimmten Komponente des Fahrzeugs ausgebildet ist, und mit einer Auswertevorrichtung zur Ermittlung der Fahrzeugposition aus den Positionsdaten bereitgestellt. Durch diese Vorrichtung ist es möglich, das erfindungsgemäße Verfahren anzuwenden.

Nachfolgend wird die Erfindung unter Bezugnahme auf die Zeichnungen näher beschrieben, wobei
- Fig. 1 eine Darstellung einer Draufsicht auf die Sensoren zur Veranschaulichung der Kalibrierung eines Paars von Positionserfassungssensoren darstellt, und
- Fig. 2 eine schematisierte Ansicht, die die Anordnung der auf Höhe der Reifen eines in einem Parkhaus fahrenden Fahrzeugs angebrachten Positionserfassungssensoren gemäß einem Ausführungsbeispiel der Erfindung darstellt.

Nachfolgend wird das Verfahren wird am Beispiel von einer in einem Parkhaus angebrachten Vielzahl von Positionserfassungssensoren anschaulich beschrieben. Die Positionserfassungssensoren ermöglichen eine hochgenaue Lokalisierung eines Fahrzeugs und damit ein pilotiertes, also automatisiertes, Einparken eines Fahrzeugs. Dies setzt voraus, dass die Position des Fahrzeugs hochgenau bestimmt werden kann.

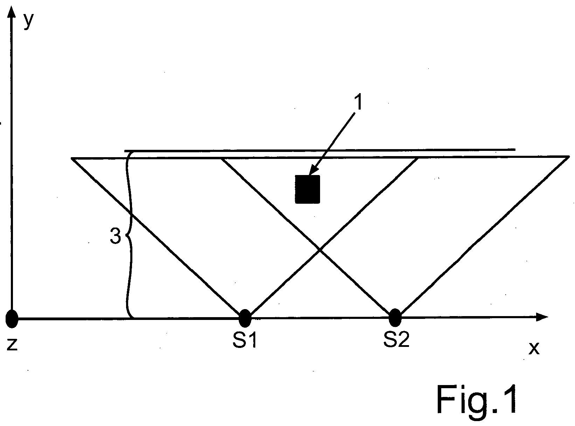

Eine erste Voraussetzung zur Durchführung des Verfahrens ist, dass das als Beispiel verwendete Parkhaus entweder bereits kartiert ist, also z.B. ein CAD-Architektenplan vorhanden ist, oder dass das Parkhaus hochgenau vermessen wird, also aus einer kartierbaren Umgebung eine kartierte Umgebung entsteht. Dieses Parkhaus muss des Weiteren mit fest darin angeordneten Positionserfassungssensoren ausgestattet werden. Dazu wird eine Vielzahl von Positionserfassungssensoren in dem Parkhaus so platziert, dass sich der "Sichtbereich", also der Bereich, den jeder einzelne der Vielzahl von Sensoren abdecken bzw. überwachen kann, von wenigstens zwei der Sensoren in einem vorbestimmten Bereich überschneidet, was in Fig. 1 schematisch als Draufsicht dargestellt ist. Die Positionserfassungssensoren S1 und S2 sind so in dem Parkhaus angeordnet, dass sie den gesamten Fahrbereich 3 des Parkhauses lückenlos abdecken. Hierbei ist zu beachten, dass das Verfahren in jeder kartierten oder kartierbaren Umgebung, in der Positionserfassungssensoren erfindungsgemäß angeordnet werden können, durchgeführt werden kann.

Damit die Position eines Objekts in dem Parkhaus hochgenau erfasst werden kann und somit ein pilotiertes Fahren möglich ist, müssen die Positionsdaten des Fahrzeugs so erfasst werden, dass diese Daten möglichst in Echtzeit verarbeitet werden können. Dazu ist es praktikabel, ein globales Koordinatensystem über alle Sensoren aufzuspannen, so dass die Positionsdaten jedes einzelnen Sensors in diesem einen Koordinatensystem beschrieben werden. Dies erleichtert die Berechnung der Gesamtposition des Objekts in dem Parkhaus.

Zur Erzeugung des globalen Koordinatensystems müssen die Positionserfassungssensoren nach Anbringung im Parkhaus kalibriert werden. Dazu wird für jeden der Positionserfassungssensoren ein Sensorkoordinatensystem aufgestellt, in dem die von jedem der Positionserfassungssensoren gemessenen Positionsdaten eines Objekts, z.B. eines Reifens eines Fahrzeugs, beschrieben werden. Danach müssen die in den Sensorkoordinatensystemen der einzelnen Positionserfassungssensoren beschriebenen Daten in ein leichter interpretierbares bzw. leichter auszuwertendes Koordinatensystem überführt werden, aus dem eine eindeutige Position des Fahrzeugs basierend auf allen Messdaten der in dem Parkhaus angeordneten Positionserfassungssensoren hervorgeht, d.h. die Positionsdaten der einzelnen Sensoren werden in ein globales Sensorkoordinatensystem überführt.

Dazu wird z.B. in der Rechnerzentrale des Parkhauses, von der aus auch die Schranken etc. gesteuert werden, ein zentrales Steuergerät, wie z.B. ein handelsüblicher PC, bereitgestellt, der die Messdaten von jedem der Sensoren übermittelt bekommt und in ein globales Sensorkoordinatensystem mittels eines dafür geeigneten intelligenten Algorithmus überführt. Auf diesem Steuergerät können die von den Positionserfassungssensoren erzeugten Messdaten für ein im Parkhaus fahrendes Fahrzeug mittels des geeigneten intelligenten Algorithmus ausgewertet werden und dann Anweisungen an das Fahrzeug zum z.B. pilotierten Einparken oder Fahren durch das Parkhaus ausgegeben werden. Das Steuergerät dient also nicht nur als Empfangseinheit für die gemessenen Positionsdaten, sondern auch als Auswertevorrichtung, um diese Positionsdaten auszuwerten und so die Fahrzeugposition zu ermitteln und auch das Fahrzeug zu leiten.

Wie in Fig. 1 dargestellt, wird zur Kalibrierung der Positionserfassungssensoren jeweils ein Objekt 1 in den sich überschneidenden Sichtbereich von zwei benachbarten Sensoren S1 und S2 aus der Vielzahl von Positionserfassungssensoren S1 bis Sn gebracht, d.h. die Sensoren S1 bis Sn werden paarweise zusammengefasst. Jeder der beiden paarweise zusammengefassten Sensoren S1 und S2 erkennt das Objekt 1 und weist ihm entsprechende Koordinaten x1, y1, z1; x2; y2, z2 in seinem Koordinatensystem zu. Dieses Verfahren wird bei allen im Parkhaus angeordneten Sensoren S1 bis Sn durchgeführt. Die Sensoren werden also paarweise zusammengefasst, erkennen ein Objekt und weisen diesem Koordinaten in ihrem jeweiligen Koordinatensystem zu. Dann werden die von jedem Paar der Sensoren dem Objekt 1 zugewiesenen Koordinaten verglichen und in einem durch einen der Positionserfassungssensoren vorbestimmten Koordinatensystem als dem globalen Koordinatensystem beschrieben. Das heißt, dass als Ergebnis der jeweiligen Vergleiche das Objekt 1 in einem eigenen globalen Koordinatensystem beschrieben wird. Dabei dient für dieses einzelne globale Koordinatensystem das Koordinatensystem des als erstes verwendeten Sensors S1, des sogenannten Mastersensors, als Bezugssystem, also als das globale Koordinatensystem. Alle anderen Sensoren S2 bis Sn spannen ihr Koordinatensystem dann in diesem Koordinatensystem auf, so dass die Position des Objekts 1 in diesem neuen globalen Koordinatensystem präzise dargestellt wird und somit ein großer virtueller Sensor entsteht.

Es können auch mehrere Objekte zur Kalibrierung verwendet werden, so dass plausibilisierte Daten erhalten werden (in Fig. 1 nicht gezeigt).

Nachdem die Kalibrierung abgeschlossen ist, kann das erfindungsgemäße Verfahren zur Ermittlung einer Fahrzeugposition angewendet werden. Eine Nach- oder Neukalibrierung muss nur erfolgen, wenn sich die Position oder Anzahl der SensorenS1 bis Sn ändert, wenn also ein neues globales Koordinatensystem aufgespannt werden muss.

Eine weitere Voraussetzung zur Durchführung des erfindungsgemäßen Verfahrens ist es, dass sich das zu lokalisierende Fahrzeug bei dem Parkhaus identifiziert. Dies geschieht durch bereits serienmäßig in dem Fahrzeug integrierte Kommunikationseinrichtungen oder externe Kommunikationseinrichtungen, durch die das Fahrzeug identifiziert werden kann. Beispielsweise kann sich das Fahrzeug mittels mobiler Kommunikation wie z.B. WLAN oder einem Navigationssystem bei dem Parkhaus identifizieren, indem es fahrzeugspezifische Daten dorthin übermittelt. Auch besteht die Möglichkeit, dass das Fahrzeug durch ein Navigationssystem zu einem mit Positionserfassungssensoren S1 bis Sn ausgestatteten Parkhaus navigiert wird und sich über dieses Navigationssystem bei dem Parkhaus identifiziert. Zur Identifizierung werden für das Fahrzeug spezifische Daten an das Parkhaus, genauer an das Steuergerät in dem Parkhaus, geschickt, die beispielsweise den für dieses Fahrzeug spezifischen Reifenabstand und/oder die Reifenanzahl enthalten. In jedem Fall kann das Fahrzeug bzw. der Fahrzeugtyp über die übermittelten Daten identifiziert werden. Zusätzlich zu den genannten Möglichkeiten ist jede Art von Identifikation des Fahrzeugs denkbar.

Fährt nun ein Fahrzeug, beispielsweise ein PKW, das sich beim Parkhaus vorher identifiziert hat, in das Parkhaus ein bzw. durch das Parkhaus durch, so ist die Art des Fahrzeugs durch diese Identifizierung bereits bekannt, es ist z.B. der Reifenabstand dieses Fahrzeugs bekannt. Die Sensoren S1 bis Sn sind also darauf vorbereitet, eine Komponente 2 des Fahrzeugs, wie z.B. einen oder mehrere in einem fahrzeugspezifischen Abstand voneinander befindliche Reifen, zu erkennen und die Positionsdaten x1, y1, z1 bis xn, yn, zn davon zu erfassen. Beim Fahren durch das Parkhaus entsteht also für zumindest einen der Reifen, also für zumindest eine Komponente 2 des Fahrzeugs, eine Ansammlung von Messpunkten durch die im Parkhaus angeordneten Positionserfassungssensoren S1 bis Sn. Diese Daten werden mittels des auf dem Steuergerät laufenden intelligenten Algorithmus über die Zeit verfolgt, plausibilisiert und fusioniert. Das heißt, dass die Positionsdaten jeder der mindestens einen vorbestimmten Komponente 2 des Fahrzeugs, also z.B. eines Reifens, über die Zeit verfolgt und plausibilisiert werden, so dass die Position einer jeden der mindestens einen vorbestimmten Komponente 2 bestimmt wird, und dann durch Fusionieren der Positionsdaten jeder der mindestens einen vorbestimmten Komponente 2 die Position des Fahrzeugs relativ zum Sensorkoordinatensystem bestimmt wird. Fusionieren heißt dabei, dass Informationen mehrerer Sensoren rechnergestützt zusammengeführt werden, um so ein besseres Ergebnis zu erhalten, indem z.B. neue Informationen durch eine Kombination unterschiedlicher Sensoren abgeleitet werden, oder eine Verbesserung der Sensorinformation durch Nutzung mehrerer gleichartiger Sensoren erreicht wird. Es werden also die Ergebnisse der Positionserfassungssensoren mittels eines Algorithmus intelligent kombiniert und somit eine lückenlose und hochgenaue Zustandsschätzung erreicht. Somit entsteht eine eindeutige und hochgenaue Aussage über die Position und Orientierung der betrachteten Komponente 2 des Fahrzeugs, also z.B. des Reifens, relativ zu dem globalen Koordinatensystem.

Dieses Verfahren kann nicht nur für z.B. einen einzelnen Reifen des Fahrzeugs durchgeführt werden, sondern für alle vier Reifen z.B. eines PKWs. Die sich auf diese Weise ergebenden vier Positions- und Orientierungshypothesen für jeden der Reifen des Fahrzeugs ergeben, wiederum fusioniert, über die Zeit verfolgt und plausibilisiert, eine hochgenaue Gesamthypothese über die Position des Fahrzeugs relativ zu dem globalen Koordinatensystem.

Da die Lage des globalen Sensorkoordinatensystems relativ zu der kartierten Umgebung, also zum Parkhaus, bekannt ist, lässt sich die Absolutposition des Fahrzeugs innerhalb des Parkhauses hochgenau bestimmen, egal, ob die Positionsdaten nur eines der Reifen ausgewertet werden oder von allen Reifen des Fahrzeugs. Die Auswertung geschieht durch den intelligenten Algorithmus.

Durch die Fusionierung der Sensordaten durch den intelligenten Algorithmus ist es möglich, die Auswertung in Echtzeit, also ohne Verzögerung durch Berechnungen, durchzuführen. Somit lässt sich ein Steuern eines Fahrzeugs in dem Parkhaus oder in jeder anderen kartierten Umgebung zum Zwecke des z.B. Einparkens oder Navigierens in Echtzeit realisieren.

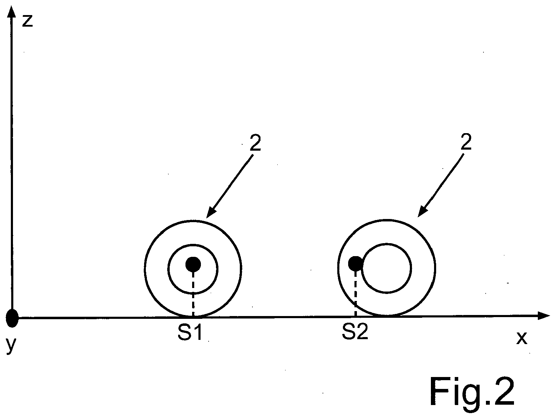

In einer bevorzugten Ausführungsform werden die Positionserfassungssensoren S1 bis Sn innerhalb des Parkhauses auf Höhe der Reifen 2 eines Fahrzeugs angebracht, wie in Fig. 2 gezeigt. Obwohl es unterschiedlich große Reifen 2 für Fahrzeuge gibt, stellt es für den Fachmann kein Problem dar, die Sensoren auf einer geeigneten Höhe innerhalb des Parkhauses zu platzieren, um alle denkbaren Reifenarten von Fahrzeugen jeglichen Typs erfassen zu können. Auch wenn die Sensoren S1 bis Sn in z.B. einem Tunnel eingesetzt werden, stellt die Höhe der Anbringung der Sensoren S1 bis Sn für den Fachmann keine Herausforderung dar.

Vorzugsweise werden Lidarsensoren (light detection and ranging-Sensoren) als Positionserfassungssensoren S1 bis Sn verwendet. Die Lidar-Messmethode ist eine mit der Radar-Messmethode eng verwandte Methode zur optischen Abstands- und Geschwindigkeitsmessung, wobei anstelle von Funkwellen Laserstrahlen verwendet werden. Der Vorteil der Verwendung von Lidar-Sensoren ist, dass sie zum einen sehr günstig sind und zum anderen eine hochgenaue Abstandsmessung zum Objekt in geschützten Umgebungen wie einem Parkhaus oder Tunnel durch das Messen des Abstands mittels Laserpulsen und Detektieren des von einem Objekt zurückgestreuten Lichts erfolgt.

Die innerhalb des als Beispiel verwendeten Parkhauses fest angeordneten Positionserfassungssensoren S1 bis Sn werden nicht nur vorzugsweise auf Höhe der Reifen 2 eines Fahrzeugs angeordnet, sondern weisen auch einen Öffnungswinkel von bevorzugt 180° auf. Vorzugsweise haben die Sensoren eine Reichweite von bis zu 30 Metern. Bevorzugt weisen die Sensoren einen Öffnungswinkel von 180° und eine Reichweite von bis zu 30 Metern auf. Somit kann der gesamte zu überwachende Fahrbereich 3 innerhalb des Parkhauses lückenlos mit einer überschaubaren Anzahl an Sensoren S1 bis Sn abgedeckt werden.

Auch wenn das erfindungsgemäße Verfahren am Beispiel eines in einem Parkhaus fahrenden Fahrzeugs mit vier Reifen beschrieben wurde, ist das Verfahren nicht darauf beschränkt. Vielmehr kann das Verfahren in jeglichen anderen kartierten oder kartierbaren Umgebungen wie z.B. einem Tunnel eingesetzt werden, solange die Sensorik so darin angebracht werden kann, dass das Verfahren erfindungsgemäß ausgeführt werden kann. Auch muss das Fahrzeug nicht unbedingt vier Reifen aufweisen, es kann z.B. auch ein Motorrad oder ein Fahrzeug mit drei Reifen etc. durch das erfindungsgemäße Verfahren hochgenau ermittelt werden.

Durch das erfindungsgemäße Verfahren kann eine Fahrzeugposition hochgenau innerhalb einer kartierten oder kartierbaren Umgebung in Echtzeit durch den Algorithmus bestimmt werden, so dass somit auch die Möglichkeit besteht, ein Fahrzeug pilotiert durch die kartierte Umgebung zu navigieren oder z.B. in einem Parkhaus einzuparken.

## Patentansprüche

1. Verfahren zur Ermittlung einer Fahrzeugposition eines zu lokalisierenden Fahrzeugs innerhalb eines vorgegebenen Fahrbereichs in einer kartierten Umgebung, aufweisend
Identifizieren des Fahrzeugs bei der kartierten Umgebung; und
Bestimmen der Fahrzeugposition durch eine Auswertung von Positionsdaten mindestens einer vorbestimmten Komponente (2) des Fahrzeugs,
wobei die Positionsdaten durch eine innerhalb der kartierten Umgebung fest angeordnete Sensoreinrichtung (S1 bis Sn) bereitgestellt werden,
**dadurch gekennzeichnet, dass**
das Fahrzeug durch die kartierte Umgebung pilotiert navigiert wird.

2. Verfahren nach Anspruch 1, wobei die Sensoreinrichtung eine Vielzahl an Positionserfassungssensoren aufweist, und einer der Vielzahl von Positionserfassungssensoren (S1) als ein Mastersensor ausgewählt wird, der ein globales Sensorkoordinatensystem aufspannt, und die anderen der Vielzahl von Positionserfassungssensoren (S2 bis Sn) ihre Positionsdaten in dem aufgespannten Sensorkoordinatensystem beschreiben.

3. Verfahren nach Anspruch 1 oder 2, wobei als die vorbestimmte Komponente (2) ein Reifen des Fahrzeugs erfasst wird.

4. Verfahren nach Anspruch 3, wobei Positionsdaten von vier Reifen des zu lokalisierenden Fahrzeugs erfasst werden.

5. Verfahren nach einem der vorhergehenden Ansprüche, wobei die Positionsdaten jeder der mindestens einen vorbestimmten Komponente (2) über die Zeit verfolgt und plausibilisiert werden, so dass die Position einer jeden der mindestens einen vorbestimmten Komponente (2) bestimmt wird, und dann durch Fusionieren der Positionsdaten jeder der mindestens einen vorbestimmten Komponente (2) die Position des Fahrzeugs relativ zum Sensorkoordinatensystem bestimmt wird.

6. Verfahren nach Anspruch 5, wobei die Positionsdaten in Echtzeit ausgewertet werden.

7. Verfahren nach einem der Ansprüche 2 bis 6, wobei jeder der Vielzahl der Positionserfassungssensoren (S1 bis Sn) einen Öffnungswinkel von 180° und eine Reichweite von bis zu 30m aufweist.

8. Verfahren nach einem der Ansprüche 2 bis 7, wobei jeder der Vielzahl der Positionserfassungssensoren (S1 bis Sn) ein Lidarsensor ist.

9. Vorrichtung zur Ermittlung einer Fahrzeugposition eines zu lokalisierenden Fahrzeugs innerhalb eines vorgegebenen Fahrbereichs in einer kartierten Umgebung, wobei die Vorrichtung in der kartierten Umgebung des Fahrzeugs installiert ist, aufweisend
ein Steuergerät, wobei über eine Kommunikationseinrichtung Daten von dem Fahrzeug an das Steuergerät zum Identifizieren des Fahrzeugs bei der kartierten Umgebung übermittelt werden;
eine innerhalb der kartierten Umgebung fest angeordnete Sensoreinrichtung (S1 bis Sn), wobei die Sensoreinrichtung (S1 bis Sn) zur Bereitstellung von Positionsdaten mindestens einer vorbestimmten Komponente (2) des Fahrzeugs ausgebildet ist, und
wobei das Steuergerät eine Auswertevorrichtung aufweist zur Ermittlung der Fahrzeugposition aus den Positionsdaten,
**dadurch gekennzeichnet, dass**
das Fahrzeug durch die kartierte Umgebung pilotiert navigierbar ist.

## Claims

1. Method for determining a position of a vehicle to be located within a predetermined driving area in a mapped environment, comprising
identifying the vehicle in the mapped environment; and
determining the position of the vehicle by analysing the positional data of at least one predetermined component (2) of the vehicle,
wherein the positional data is provided by a sensor device (S1 to Sn) arranged securely in the mapped environment,
**characterised in that**
the vehicle can be navigated through the mapped environment in a piloted manner.

2. Method according to claim 1, wherein the sensor device comprises a plurality of position detection sensors, and one of the plurality of position detection sensors (S1) is selected as a master sensor, which defines a global sensor coordinate system, and the remaining sensors comprising the plurality of position detection sensors (S2 to Sn) describe their positional data in the global sensor coordinate system.

3. Method according to claim 1 or 2, wherein the predetermined component (2) is a tyre of the vehicle to be located.

4. Method according to claim 3, wherein positional data is collected from four tyres of the vehicle to be located.

5. Method according to any one of the preceding claims, wherein the positional data of each of the at least one predetermined component (2) is monitored over time and tested for plausibility, thereby determining a position of each of the at least one predetermined component (2), and determining the position of the vehicle relative to the sensor coordinate system by merging the positional data of each of the at least one predetermined component (2).

6. Method according to claim 5, wherein the positional data are analysed in real time.

7. Method according to any one of claims 2 to 6, wherein each of the plurality of position detection sensors (S1 to Sn) has an opening angle of 180° and a range of up to 30m.

8. Method according to any one of claims 2 to 7, wherein each of the plurality of position detection sensors (S1 to Sn) is a LIDAR sensor.

9. Device for determining a position of a vehicle to be located within a predetermined driving area in a mapped environment, wherein the device is installed in the mapped environment of the vehicle, comprising:
a control device, wherein data is sent by means of a communication system from the vehicle to the control device to identify the vehicle in the mapped environment;
a sensor device (S1 to Sn) arranged securely in the mapped environment, wherein the sensor device (S1 to Sn) is configured to provide positional data of at least one predetermined component (2) of the vehicle, and
wherein the control device has an analysis device for determining the vehicle position from the positional data,
**characterised in that**
the vehicle can be navigated through the mapped environment in a piloted manner.

## Revendications

1. Procédé pour la détermination d'une position de véhicule d'un véhicule à localiser à l'intérieur d'une zone de circulation spécifiée dans un environnement cartographié, présentant
l'identification du véhicule dans l'environnement cartographié ; et
la définition de la position de véhicule par une évaluation de données de position d'au moins un composant (2) prédéfini du véhicule,
les données de position étant fournies par un dispositif capteur (S1 à Sn) disposé de manière fixe à l'intérieur de l'environnement cartographié,
**caractérisé en ce que**
le véhicule est soumis à une navigation pilotée à travers l'environnement cartographié.

2. Procédé selon la revendication 1, le dispositif capteur présentant une pluralité de capteurs de détection de position et l'un de la pluralité de capteurs de détection de position (S1) étant sélectionné en tant que capteur maître, qui déploie un système global de coordonnées de capteur et les autres capteurs de la pluralité de capteurs de détection de position (S2 à Sn) décrivant leurs données de position dans le système de coordonnées de capteurs déployé.

3. Procédé selon la revendication 1 ou 2, un pneu du véhicule étant détecté en tant que composant (2) prédéfini.

4. Procédé selon la revendication 3, des données de position de quatre pneus du véhicule à localiser étant détectées.

5. Procédé selon l'une quelconque des revendications précédentes, les données de position de chacun des au moins un composants (2) prédéfinis respectifs étant suivies et leur probabilité étant vérifiée au cours du temps de telle sorte que la position de chacun des au moins un composants (2) prédéfinis est définie, puis, par fusion des données de position de chacun des au moins un composants (2) prédéfinis, la position du véhicule par rapport aux systèmes de coordonnées de capteurs étant définie.

6. Procédé selon la revendication 5, les données de position étant évaluées en temps réel.

7. Procédé selon l'une quelconque des revendications 2 à 6, chacun de la pluralité des capteurs de détection de position (S1 à Sn) présentant un angle d'ouverture de 180° et une portée allant jusqu'à 30 m.

8. Procédé selon l'une quelconque des revendications 2 à 7, chacun de la pluralité des capteurs de détection de position (S1 à Sn) étant un capteur lidar.

9. Dispositif pour la détermination d'une position de véhicule d'un véhicule à localiser à l'intérieur d'une zone de circulation spécifiée dans un environnement cartographié, le dispositif étant installé dans l'environnement cartographié du véhicule, présentant
un appareil de commande, des données étant transmises du véhicule à l'appareil de commande par l'intermédiaire d'un dispositif de communication pour identifier le véhicule dans l'environnement cartographié ;
un dispositif capteur (S1 à Sn) disposé de manière fixe à l'intérieur de l'environnement cartographié, le dispositif capteur (S1 à Sn) étant réalisé pour fournir des données de position au moins d'un composant (2) prédéfini du véhicule, et
l'appareil de commande présentant un dispositif d'évaluation pour déterminer la position de véhicule à partir des données de position,
**caractérisé en ce que**
le véhicule est soumis à une navigation pilotée à travers l'environnement cartographié.
